# FASCICULE DE BREVET EUROPEEN

(11) **EP 1 706 610 B1**
(45) Date de publication et mention de la délivrance du brevet: **09.02.2011**
(21) Numéro de dépôt: 04816474.3
(22) Date de dépôt: 22.12.2004
(51) Int. Cl.: F01P 3/20, F01P 11/20, B60H 1/00, F02N 19/10

(54) **DISPOSITIF DE REGULATION THERMIQUE DE FLUIDES CIRCULANT DANS UN VEHICULE A MOTEUR THERMIQUE ET PROCEDE MIS EN OEUVRE PAR CE DISPOSITIF**
VORRICHTUNG ZUR STEUERUNG DER TEMPERATUR VON IN EINEM VERBRENNUNGSMOTORFAHRZEUG ZIRKULIERENDEN FLUIDEN UND VON DER VORRICHTUNG VERWENDETES VERFAHREN
DEVICE FOR CONTROLLING THE TEMPERATURE OF FLUIDS CIRCULATING IN A HEAT ENGINE VEHICLE AND METHOD USED BY SAID DEVICE

(30) Priorité: 23.12.2003 FR 0315272
(43) Date de publication de la demande: 04.10.2006
(60) Demande divisionnaire: 10168097.3
(73) Titulaire: Peugeot Citroën Automobiles SA, 78943 Vélizy-Villacoublay Cedex (FR)
(72) Inventeur: BOUDARD, Emmanuel, F-78960 Voisins le Bretonneux (FR); LE LIEVRE, Armel, F-78360 Montesson (FR); BARTOLETTI, Mathieu, F-75018 Paris (FR)
(74) Mandataire: Ménès, Catherine
(86) Numéro de dépôt international: PCT/FR2004/003347
(87) Numéro de publication internationale: WO 2005/064133

(56) Documents cités:
- EP-A- 0 593 942
- DE-A- 4 032 701
- DE-A- 19 521 292
- DE-A1- 19 750 721
- US-A- 5 215 044
- US-A- 5 730 089
- US-A1- 2003 089 319

## Description

La présente invention concerne un dispositif de régulation thermique de fluides circulant dans un véhicule à moteur thermique et un procédé mis en oeuvre par ce dispositif.

L'invention s'applique notamment à la régulation thermique de fluides circulant dans un véhicule de façon à participer au fonctionnement d'un moteur Diesel.

On connaît déjà dans l'état de la technique un dispositif de régulation thermique de fluides circulant dans un véhicule à moteur thermique, du type comprenant un circuit dans lequel circule un liquide caloporteur de refroidissement du moteur thermique et au moins un échangeur de chaleur liquide caloporteur / fluide à réguler.

Ce type de dispositif peut être utilisé pour réchauffer l'huile de lubrification d'un moteur.

En effet, à basse température, l'huile de lubrification du moteur thermique a une viscosité élevée ce qui entraîne des frottements supplémentaires dans le moteur et par conséquent une surconsommation de carburant. Celle-ci intervient notamment au démarrage du véhicule lorsque le moteur thermique et l'huile sont froids.

Il est connu d'utiliser un échangeur de chaleur liquide caloporteur / huile de lubrification pour accélérer la montée en température de l'huile au démarrage.

Le type de dispositif précité peut être également utilisé pour réduire la quantité d'oxydes d'azote émis par un véhicule.

En effet, la production d'oxydes d'azote (NOₓ) est liée notamment à la température du mélange de gaz introduit dans les cylindres du moteur thermique du véhicule. Plus la température du mélange est élevée, plus la production d'oxydes d'azote est importante. Le mélange de gaz introduit dans les cylindres comprend notamment de l'air d'admission et, le cas échéant, des gaz d'échappement remis en circulation avec de l'air d'admission. Ces gaz d'échappement sont communément appelés gaz d'échappement recirculés EGR (Exhaust Gaz Recycling).

En abaissant la température des gaz recirculés, par exemple avec un échangeur de chaleur liquide caloporteur / gaz d'échappement recirculés, on abaisse la température du mélange de gaz introduit dans les cylindres ce qui réduit d'autant la production d'oxydes d'azote.

Ainsi, il est connu d'utiliser un dispositif de régulation thermique comprenant au moins un échangeur de chaleur liquide caloporteur / fluide, dans certains véhicules pour réchauffer l'huile de lubrification et dans d'autres véhicules pour refroidir des gaz d'échappement recirculés.

On connait notamment au travers du document DE19750721 un circuit de refroidissement d'un moteur à combustion comportant un circuit de liquide de refroidissement présentant un moyen de chauffage, un échangeur liquide / huile de lubrification, et un radiateur.

Afin de réduire les coûts, il est souhaitable de disposer de moyens aussi simples et efficaces que possible pour réaliser les régulations thermiques des fluides cités précédemment.

A cet effet, l'invention a pour objet un dispositif de régulation thermique de fluides circulant dans un véhicule à moteur thermique, selon la revendication 1.

Un tel dispositif permet de réduire efficacement la surconsommation de carburant au démarrage du véhicule, et permet également de réduire notablement la production d'oxyde d'azote. Il est simple à mettre en place puisqu'il utilise le circuit de liquide caloporteur de refroidissement du moteur, équipant habituellement le véhicule.

Un dispositif de régulation thermique selon l'invention peut en outre comporter l'une ou plusieurs des caractéristiques suivantes :
- la source ou le puits de chaleur comprend des moyens de stockage thermique pouvant échanger de la chaleur avec le liquide caloporteur, notamment pendant un mode de chauffage, dans lequel la chaleur des moyens de stockage est transférée au liquide caloporteur, et pendant un mode de régénération, dans lequel la chaleur du liquide caloporteur est transférée aux moyens de stockage ;
- les moyens de stockage thermiques comprennent un composé chimique stockant ou libérant de l'énergie thermique en changeant de phase ;
- le circuit de liquide caloporteur comprend des moyens de dérivation de l'échangeur liquide caloporteur / huile ;
- les moyens de dérivation de l'échangeur liquide caloporteur / huile comprennent une branche de dérivation de l'échangeur liquide caloporteur / huile et une vanne à trois voies comprenant des première et seconde voies de mêmes signes, raccordées l'une à l'échangeur et l'autre à la branche de dérivation de l'échangeur liquide caloporteur / huile, et une troisième voie de signe opposé aux précédentes raccordée au circuit ;
- les moyens de dérivation de l'échangeur liquide caloporteur / huile comprennent une vanne à quatre voies comprenant deux voies de signes opposés raccordées à l'échangeur liquide caloporteur / huile et deux voies de signes opposés raccordées au circuit de liquide caloporteur ;
- dans lequel le circuit de liquide caloporteur comprend des moyens de dérivation de la source ou du puits de chaleur ;
- les moyens de dérivation de la source ou du puits de chaleur comprennent une branche de dérivation de la source ou du puits de chaleur et une vanne à trois voies comprenant des première et seconde voies de mêmes signes, raccordées l'une à la source ou au puits de chaleur et l'autre à la branche de dérivation de la source ou du puits de chaleur, et une troisième voie de signe opposé aux précédentes raccordée au circuit ;
- les moyens de dérivation de la source ou du puits de chaleur comprennent une vanne à quatre voies comprenant deux voies de signes opposés raccordées à la source ou au puits de chaleur et deux voies de signes opposés raccordées au circuit de liquide caloporteur ;
- le circuit de liquide caloporteur comprend des moyens de dérivation du moteur ;
- les moyens de dérivation du moteur comprennent une branche de dérivation de ce moteur et une vanne à trois voies comprenant des première et seconde voies de mêmes signes, raccordées l'une au moteur et l'autre à la branche de dérivation de ce moteur, et une troisième voie de signe opposé aux précédentes raccordée au circuit ;
- les moyens de dérivation du moteur comprennent une vanne à quatre voies comprenant deux voies de signes opposés raccordées au moteur et deux voies de signes opposés raccordées au circuit ;
- le circuit de liquide caloporteur est raccordé de plus à des moyens d'échange thermique entre le liquide caloporteur et l'air d'un habitacle du véhicule ;
- le circuit de liquide caloporteur est raccordé en outre à une pompe électrique permettant de faire circuler le liquide caloporteur dans au moins une partie du circuit notamment lorsque le moteur est à l'arrêt.

L'invention sera mieux comprise à la lecture de la description qui va suivre, donnée uniquement à titre d'exemple et faite en se référant aux dessins dans lesquels :
- la figure 1 est un schéma d'un dispositif selon un premier mode de réalisation de l'invention pour la régulation thermique de fluides circulant dans un véhicule à moteur thermique ;
- la figure 2 est un diagramme fonctionnel d'un procédé mis en oeuvre par le dispositif représenté sur la figure 1 ;
- la figure 3 est un schéma d'un dispositif selon un second mode de réalisation de l'invention pour la régulation thermique de fluides circulant dans un véhicule à moteur thermique.

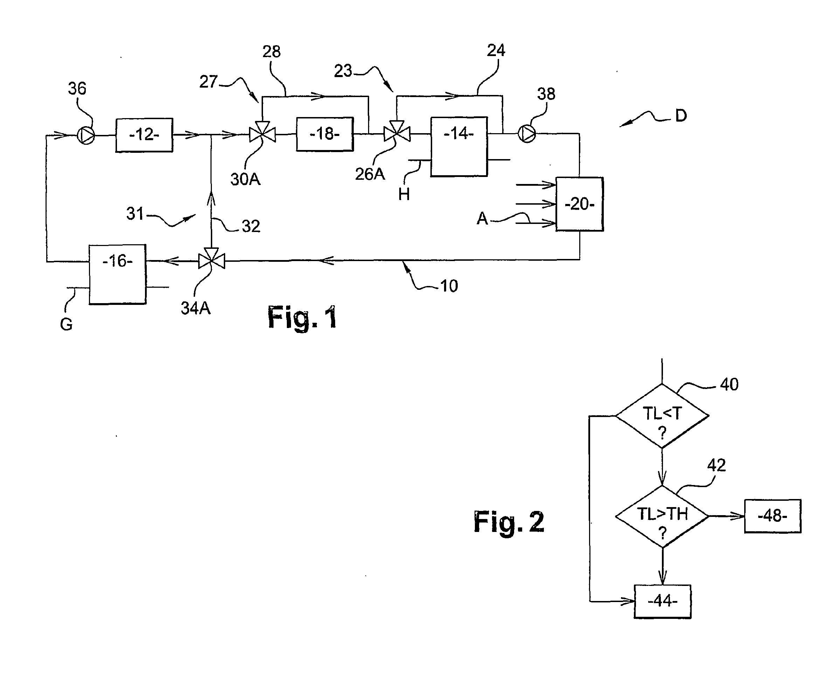

On a représenté sur la figure 1 un dispositif D selon un premier mode de réalisation de l'invention pour la régulation thermique de fluides circulant dans un véhicule à moteur thermique, par exemple de type Diesel.

Le dispositif de régulation thermique D comprend un circuit 10 de liquide caloporteur, destiné au refroidissement du moteur thermique 12 du véhicule. Le circuit 10 est donc raccordé à une partie du moteur 12 dans laquelle circule le liquide caloporteur.

Le dispositif de régulation thermique D est destiné à réguler thermiquement de l'huile de lubrification du moteur thermique 12, circulant dans un circuit H, ainsi que des gaz d'échappement recirculés, circulant dans un circuit G.

A cet effet le dispositif D comprend un premier échangeur 14 liquide caloporteur / huile de lubrification et un second échangeur 16 liquide caloporteur / gaz d'échappement recirculés raccordés au circuit 10 de liquide caloporteur.

Le circuit 10 de liquide caloporteur est en outre raccordé à une source ou à un puits de chaleur fournissant une énergie thermique habituellement non valorisée (énergie thermique des gaz d'échappement, chaleur résiduelle...). La source ou le puits de chaleur comprend, par exemple, des moyens de stockage thermique 18 pouvant échanger de la chaleur avec le liquide caloporteur. De préférence, les moyens de stockage thermique 18 comprennent un composé chimique stockant ou libérant de l'énergie thermique en changeant de phase et des moyens d'échange thermique entre le liquide caloporteur et le composé chimique.

Les moyens de stockage 18 peuvent fonctionner suivant au moins deux modes, à savoir un mode de chauffage dans lequel la chaleur des moyens de stockage 18 est transférée au liquide caloporteur du circuit 10, et un mode de régénération dans lequel la chaleur du liquide caloporteur est transféré aux moyens de stockage 18.

Dans l'exemple de la figure 1, les deux échangeurs 14 et 16 ainsi que les moyens de stockage thermique 18 sont raccordés en série dans le circuit 10 de liquide caloporteur, dans l'ordre : moyens de stockage thermique 18, échangeur 14 liquide caloporteur / huile, échangeur 16 liquide caloporteur / gaz d'échappement recirculés, en considérant le sens de circulation du liquide caloporteur.

Pour permettre le chauffage d'un habitacle du véhicule, le circuit 10 de liquide caloporteur est raccordé à des moyens d'échange thermique 20 entre le liquide caloporteur et de l'air A destiné à circuler dans cet habitacle. Ces moyens d'échange thermique 20 comprennent par exemple un aérotherme classique.

Le circuit 10 comprend des vannes à plusieurs voies qui seront décrites ci-dessous. Deux voies sont dites de mêmes signes si elles forment deux entrées (ou deux sorties) de liquide caloporteur. Deux voies sont dites de signes opposés si elles forment l'une une entrée et l'autre une sortie de liquide caloporteur.

Pour pouvoir le cas échéant limiter ou empêcher les échanges thermiques entre le liquide caloporteur et l'huile, le circuit 10 de liquide caloporteur comprend des moyens 23 de dérivation de l'échangeur 14 liquide caloporteur / huile.

Dans le premier mode de réalisation de l'invention, les moyens de dérivation 23 comprennent une branche 24 de dérivation de l'échangeur 14 liquide caloporteur / huile et une vanne 26A à trois voies. Cette vanne 26A comprend deux voies de mêmes signes formant une sortie de liquide caloporteur raccordée à l'échangeur 14 et une sortie de liquide caloporteur raccordée à la branche de dérivation 24, et une voie de signe opposé aux précédentes formant une entrée de liquide caloporteur raccordée au circuit 10, plus particulièrement à la sortie des moyens de stockage thermique 18.

Dans une première variante, la vanne 26A peut être placée en sortie de l'échangeur 14 et ainsi comprendre deux voies de mêmes signes formant une entrée de liquide caloporteur raccordée à l'échangeur 14 et une entrée de liquide caloporteur raccordée à la branche de dérivation 24, et une voie de signe opposé aux précédentes formant une sortie de liquide caloporteur raccordée au circuit 10, plus particulièrement à l'entrée des moyens d'échange thermique 20.

Dans une seconde variante, la branche de dérivation 24 et la vanne associée 26A peuvent être remplacées par une vanne placée dans le circuit d'huile H de façon à pouvoir isoler l'échangeur 14 liquide caloporteur / huile de ce circuit d'huile H.

Pour pouvoir le cas échéant limiter ou empêcher les échanges thermiques entre le liquide caloporteur et les moyens de stockage thermique 18, le circuit 10 de liquide caloporteur comprend des moyens 27 de dérivation des moyens de stockage thermique 18.

Dans le premier mode de réalisation de l'invention, les moyens de dérivation 27 comprennent une branche 28 de dérivation de ces moyens de stockage thermique 18 et une vanne 30A à trois voies. Cette vanne 30A comprend deux voies de mêmes signes formant une sortie de liquide caloporteur raccordée à l'entrée des moyens de stockage thermique 18 et une sortie de liquide caloporteur raccordée à la branche de dérivation 28, et une voie de signe opposé aux précédentes formant une entrée de liquide caloporteur raccordée au circuit 10, plus particulièrement à la sortie du moteur 12.En variante, la vanne 30A peut être placée en sortie de l'échangeur 18 et ainsi comprendre deux voies de mêmes signes formant une entrée de liquide caloporteur raccordée aux moyens de stockage thermique 18 et une entrée de liquide caloporteur raccordée à la branche de dérivation 28, et une voie de signe opposé aux précédentes formant une sortie de liquide caloporteur raccordée au circuit 10, plus particulièrement à l'entrée de l'échangeur 14.

Pour pouvoir le cas échéant limiter ou empêcher les échanges thermiques entre le liquide caloporteur et au moins le moteur 12, le circuit 10 de liquide caloporteur comprend des moyens 31 de dérivation du moteur 12.

Dans le premier mode de réalisation de l'invention, les moyens de dérivation 31 comprennent une branche 32 de dérivation de ce moteur 12 et une vanne 34A à trois voies. La vanne 34A comprend deux voies de mêmes signes formant une sortie de liquide caloporteur raccordée à l'entrée du moteur 12 (par l'intermédiaire de l'échangeur 16) et une sortie de liquide caloporteur raccordée à la branche de dérivation 32, et une voie de signe opposé aux précédentes formant une entrée de liquide caloporteur raccordée au circuit 10, plus particulièrement à la sortie de l'échangeur 14 liquide caloporteur / huile (par l'intermédiaire des moyens d'échange thermique 20).

Selon une première variante la vanne 34A peut comprendre deux voies de mêmes signes formant une sortie de liquide caloporteur raccordée directement à l'entrée du moteur 12 et une sortie de liquide caloporteur raccordée à la branche de dérivation 32, et une voie de signe opposé aux précédentes formant une entrée de liquide caloporteur raccordée à la sortie de l'échangeur 16 liquide caloporteur / gaz d'échappement recirculés.

Selon une seconde variante, la vanne 34A peut être placée en sortie du moteur 12 et ainsi comprendre deux voies de mêmes signes formant une entrée de liquide caloporteur raccordée à la sortie du moteur 12 et une entrée de liquide caloporteur raccordée à la branche de dérivation 32, et une voie de signe opposé aux précédentes formant une sortie de liquide caloporteur raccordée au circuit 10, plus particulièrement à l'entrée de l'échangeur 18.

Dans l'exemple représenté sur la figure 1, l'entrée de la vanne 34A est raccordée à la sortie des moyens d'échange thermique 20, c'est à dire à la sortie de l'échangeur 14 par l'intermédiaire des moyens d'échange thermique 20.

Lorsque le moteur 12 est en marche, le liquide caloporteur est mis en circulation dans le circuit 10 au moyen d'une pompe mécanique 36 entraînée par ce moteur 12. Cette pompe mécanique 36 est raccordée au circuit 10, par exemple en amont du moteur 12.

Lorsque le moteur 12 est à l'arrêt, le liquide caloporteur peut les cas échéant être mis en circulation dans le circuit 10 au moyen d'une pompe électrique 38 raccordée au circuit 10, par exemple entre l'échangeur 14 liquide caloporteur / huile et les moyens d'échange thermique 20.

On notera que la pompe électrique 38 est susceptible de faire circuler le liquide caloporteur dans la branche 32 de dérivation du moteur 12.

Le cas échéant, le moteur 12 étant en marche, les pompes mécanique 36 et électrique 38 peuvent fonctionner simultanément.

De préférence, le dispositif de régulation thermique D selon ce premier mode de réalisation de l'invention comprend un capteur de température du liquide caloporteur traversant le moteur 12, un capteur de température de l'huile traversant l'échangeur 14 et un capteur de température du composé chimique des moyens de stockage 18. Ces capteurs ne sont pas représentés.

On décrira ci-dessous certains aspects d'un fonctionnement possible du dispositif de régulation thermique D selon l'invention.

### 1 ) Corrélation entre les fonctionnements des moyens de stockage thermique 18 et de l'échangeur 14 liquide caloporteur / huile.

Cette corrélation est réalisée de préférence en pilotant, conformément au procédé schématisé sur la figure 2, des moyens de réglage de la quantité de liquide caloporteur ou d'huile circulant dans l'échangeur 14, tels que la vanne 26A.

Selon ce procédé on relève les températures de l'huile TH et du liquide caloporteur TL et on détermine si la température de l'huile TH est inférieure à une température prédéterminée T, par exemple 110°C (première condition 40).

Si cette première condition 40 est vérifiée, c'est-à-dire si la température de l'huile TH est inférieure à T, on détermine si la température du liquide caloporteur TL est supérieure à la température de l'huile TH (seconde condition 42), ce qui a lieu notamment lorsque les moyens de stockage thermique 18 sont en mode de chauffage. On notera que les moyens de stockage thermique 18 sont en mode de chauffage en particulier pendant une période T1 de quelques minutes suivant le démarrage du moteur, par exemple 5 minutes.

Si la seconde condition 42 est réalisée, c'est-à-dire si la température du liquide caloporteur TL est supérieure à TH, on règle les quantités de liquide caloporteur et d'huile circulant dans l'échangeur 14 de façon à favoriser le chauffage de l'huile par échange thermique avec le liquide caloporteur relativement chaud (étape 44). Dans l'exemple illustré, ce réglage est réalisé en réglant la vanne 26A de façon à faire circuler le liquide caloporteur dans l'échangeur 14 liquide caloporteur / huile. Ce réglage permet une montée en température rapide de l'huile de lubrification du moteur 12. En effet, la chaleur transmise au liquide caloporteur par les moyens de stockage thermique 18 est transférée, au moins en partie, à l'huile de lubrification dans l'échangeur 14 (qui est disposé en aval des moyens de stockage 18 dans le circuit 10).

Si la seconde condition 42 n'est pas réalisée, c'est-à-dire si la température du liquide caloporteur TL est inférieure à TH (ce qui peut avoir lieu lorsque les moyens de stockage thermique 18 sont en mode de régénération), on règle les quantités de liquide caloporteur et d'huile circulant dans l'échangeur 14 de façon à éviter ou minimiser l'échange thermique entre l'huile et le liquide caloporteur relativement froid et donc le refroidissement de cette huile (étape 48). Dans l'exemple illustré, ce réglage peut être réalisé en réglant la vanne 26A associée à la branche de dérivation 24 de l'échangeur 14 de façon à faire circuler le liquide caloporteur dans cette branche de dérivation 24 ou de façon à répartir le liquide caloporteur pour la plus grande part dans la branche de dérivation 24 et pour la plus petite part dans l'échangeur 14 afin d'éviter tout risque d'ébullition de liquide caloporteur résiduel dans l'échangeur 14.

Si la première condition 40 n'est pas réalisée, c'est-à-dire si la température de l'huile TH est supérieure à T, on règle les quantités de liquide caloporteur et d'huile circulant dans l'échangeur 14 de façon à favoriser le refroidissement de l'huile (jusqu'à par exemple la température T) par échange thermique avec le liquide caloporteur (étape 44). Dans l'exemple illustré, ce réglage est réalisé en réglant la vanne 26A de façon à faire circuler le liquide caloporteur 10 dans l'échangeur 14 liquide caloporteur / huile.

### 2) Corrélation entre les fonctionnements des moyens de stockage thermique 18 et de l'échangeur 16 liquide caloporteur / gaz d'échappement recirculés.

Le liquide caloporteur est susceptible de circuler à la fois dans l'échangeur 16 liquide caloporteur / gaz d'échappement recirculés et les moyens de stockage thermique 18, ceci indépendamment du fonctionnement en mode de chauffage ou de régénération de ces moyens de stockage 18.

En effet, les gaz d'échappement ne peuvent être recirculés que lorsque le moteur 12 est en marche. Ce moteur 12 étant en marche, les moyens de stockage thermique 18 sont susceptibles d'être en échange thermique avec le liquide caloporteur, d'une part, lorsque les moyens de stockage thermique 18 sont en mode de chauffage, pour céder de la chaleur au liquide caloporteur (en particulier pendant la période T1 de quelques minutes suivant le démarrage du moteur) et, d'autre part, lorsque les moyens de stockage thermique 18 sont en mode de régénération, pour prélever de la chaleur du liquide caloporteur (habituellement pendant une période T2 d'une dizaine de minutes).

Pendant la période T1 suivant le démarrage du moteur, la quantité d'oxydes d'azote produite est habituellement relativement faible, si bien que le chauffage du liquide caloporteur par les moyens de stockage thermique 18 a :
- un effet souhaitable sur la montée en température du moteur 12 qui permet de limiter efficacement la consommation de ce moteur pendant la période T1, et
- un effet indésirable mais limité sur la production d'oxydes d'azote.

Pendant la période T2 de régénération des moyens de stockage thermique 18 le refroidissement du liquide caloporteur par ces moyens de stockage 18 a un effet souhaitable d'abaissement des températures du moteur 12 et des gaz recirculés qui permet de limiter efficacement la production d'oxydes d'azote.

### 3) Corrélation entre les fonctionnements des moyens de stockage thermique 18 et des moyens 20 d'échange thermique entre le liquide caloporteur et l'air de l'habitacle.

Dans ce paragraphe 3), on propose des fonctionnements possibles du dispositif de régulation thermique D alors que l'on chauffe l'air de l'habitacle à l'aide des moyens 20 réalisant un échange thermique entre cet air et le liquide caloporteur.

### a) Moyens de stockage thermique 18 en mode de régénération et moteur 12 en marche.

Dans ce cas, on règle la quantité de liquide caloporteur circulant dans les moyens de stockage thermique 18 de façon à éviter ou minimiser l'échange thermique entre les moyens de stockage thermique 18 en mode de régénération et le liquide caloporteur relativement chaud. Dans l'exemple illustré, ce réglage peut être réalisé en réglant la vanne 30A associée à la branche de dérivation 28 des moyens de stockage thermique 18 de façon à faire circuler le liquide caloporteur dans cette branche de dérivation 28.

Ainsi, la chaleur du liquide caloporteur, qui provient notamment du moteur 12, n'est pas cédée aux moyens de stockage thermique 18, si bien que l'air de l'habitacle peut, en traversant les moyens d'échange thermique 20, prélever une quantité plus importante de chaleur au liquide caloporteur.

Du fait que l'on évite ou minimise l'échange thermique entre les moyens de stockage thermique 18 (en mode de régénération) et le liquide caloporteur relativement chaud, on ne bénéficie a priori pas de l'effet souhaitable de limitation de la production d'oxydes d'azote obtenu pendant la période T2 décrite ci-dessus au paragraphe 2).

Toutefois, le chauffage de l'habitacle est souhaité généralement dans des conditions climatiques telles que la température de l'environnement extérieur au véhicule est relativement basse. Or dans de telles conditions climatiques, les problèmes d'émission d'oxydes d'azote dans l'environnement sont beaucoup moins exacerbés.

### b) Moyens de stockage thermique 18 en mode de chauffage et moteur 12 arrêté associé à une première catégorie de condition(s).

Cette première catégorie de condition(s) comprend par exemple une commande volontaire d'arrêt du moteur par l'utilisateur.

Dans ce cas, on règle la quantité de liquide caloporteur circulant dans les moyens de stockage thermique 18 de façon à éviter ou minimiser l'échange thermique entre les moyens de stockage thermique 18 en mode de chauffage et le liquide caloporteur afin de conserver la chaleur encore en stock jusqu'à un prochain démarrage du moteur 12. Dans l'exemple illustré, ce réglage peut être réalisé en réglant la vanne 30A associée à la branche de dérivation 28 des moyens de stockage thermique 18 de façon à faire circuler le liquide caloporteur dans cette branche de dérivation 28.

Le liquide caloporteur est mis en circulation dans le circuit 10 au moyen de la pompe électrique 38.

L'air de l'habitacle est réchauffé en traversant les moyens d'échange thermique 20 de façon à prélever de la chaleur au liquide caloporteur, cette chaleur provenant d'autres organes raccordés au circuit 10 que les moyens de stockage thermique 18, en particulier le moteur 12 encore relativement chaud.

### c) Moyens de stockage thermique 18 en mode de chauffage et moteur 12 fonctionnant à un régime de ralenti après une période de régime plus élevé.

Dans ce cas, de façon similaire au paragraphe b) ci-dessus, on évite ou minimise l'échange thermique entre les moyens de stockage thermique 18 en mode de chauffage et le liquide caloporteur afin de conserver la chaleur encore en stock jusqu'à un prochain retour à un régime plus élevé du moteur 12.

### d) Moyens de stockage thermique 18 en mode de chauffage et moteur 12 arrêté associé à une seconde catégorie de condition(s).

Cette seconde catégorie de condition(s) comprend par exemple une commande d'arrêt du moteur par un calculateur du véhicule (ce type d'arrêt est généralement de courte durée), un déclenchement de feux de détresse du véhicule accompagnant un arrêt du moteur, un dysfonctionnement du véhicule imposant un arrêt du moteur ou encore une commande de chauffage de l'air de l'habitacle anticipant un démarrage du moteur suivant généralement un arrêt prolongé du véhicule.

Dans ce cas, on règle la quantité de liquide caloporteur circulant dans les moyens de stockage thermique 18 de façon à favoriser le chauffage du liquide caloporteur par échange thermique avec ces moyens de stockage 18 et ainsi optimiser l'efficacité du chauffage de l'air de l'habitacle. Dans l'exemple illustré, ce réglage peut être réalisé en réglant la vanne 30A de façon à faire circuler le liquide caloporteur dans les moyens de stockage thermique 18.

Le liquide caloporteur est mis en circulation dans le circuit 10 au moyen de la pompe électrique 38.

L'air de l'habitacle est réchauffé en traversant les moyens d'échange thermique 20 de façon à prélever de la chaleur au liquide caloporteur, cette chaleur provenant, pour une partie relativement importante, des moyens de stockage thermique 18.

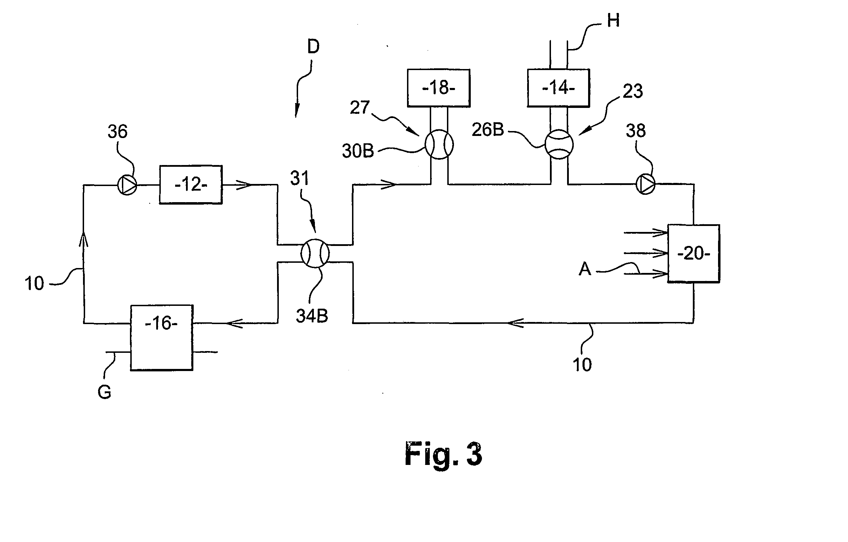

On a représenté sur la figure 3 un dispositif D selon un second mode de réalisation de l'invention pour la régulation thermique de fluides circulant dans un véhicule à moteur thermique, par exemple de type Diesel.

Sur cette figure 3, les éléments analogues à ceux de la figure 1 sont désignés par les mêmes références.

Ce mode de réalisation diffère du précédent en ce que chaque branche de dérivation 24, 28 et 32, ainsi que sa vanne associée 26A, 30A et 34A a été remplacée par une vanne à quatre voies.

Plus précisément, dans le dispositif D selon le second mode de réalisation, les moyens 23 de dérivation de l'échangeur 14 liquide caloporteur / huile comprennent une vanne à quatre voies 26B munie de :
- deux voies de signes opposés raccordées à l'échangeur 14,
- deux voies de signes opposés raccordées au circuit 10 de liquide caloporteur, plus précisément une voie raccordée à l'entrée des moyens d'échange thermique 20 et une voie raccordée à la sortie du moteur 12.

De plus, dans le dispositif D selon le second mode de réalisation, les moyens 27 de dérivation des moyens de stockage thermique 18 comprennent une vanne à quatre voies 30B munie de :
- deux voies de signes opposés raccordées aux moyens de stockage thermique 18,
- deux voies de signes opposés raccordées au circuit 10 de liquide caloporteur, plus précisément, une voie raccordée à la sortie du moteur 12 et une voie raccordée à l'entrée de l'échangeur 14.

Enfin, dans le dispositif D selon le second mode de réalisation, les moyens 31 de dérivation du moteur 12 comprennent une vanne à quatre voies 34B munie de :
- deux voies de signes opposés raccordées au moteur 12, plus particulièrement à la sortie du moteur 12 et à l'entrée de ce moteur 12 par l'intermédiaire de l'échangeur 16,
- deux voies de signes opposés raccordées au circuit 10, plus particulièrement à la sortie des moyens d'échange thermique 20 et à l'entrée des moyens de stockage thermique 18.

L'invention ne se limite pas aux modes de réalisation décrits.

En particulier, le circuit 10 de liquide caloporteur peut en outre comprendre une branche de dérivation de l'échangeur 16 liquide caloporteur / gaz d'échappement recirculés, pilotée par une vanne, de façon similaire à la dérivation de l'échangeur 14.

Les moyens de stockage thermique peuvent être remplacés par d'autres moyens formant une source ou un puits de chaleur.

Des moyens additionnels de chauffage du liquide caloporteur, tels que des résistances électriques ou un brûleur (éventuellement programmable), peuvent être prévus sur le circuit 10 entre la sortie du moteur 12 et les moyens d'échange thermique 20.

L'invention peut s'appliquer également aux véhicules fonctionnant avec un moteur à essence.

## Revendications

1. Dispositif de régulation thermique de fluides circulant dans un véhicule à moteur thermique (12), du type comprenant un circuit (10) dans lequel circule un liquide caloporteur de refroidissement du moteur thermique (12) et au moins un échangeur de chaleur (14, 16) liquide caloporteur / fluide à réguler, destiné à réguler thermiquement des premier et deuxième fluides, formés respectivement par de l'huile de lubrification du moteur thermique du véhicule et par des gaz d'échappement recirculés, et comprenant : un premier échangeur (14) liquide caloporteur / huile de lubrification, un second échangeur (16) liquide caloporteur / gaz d'échappement recirculés, les premier et second échangeurs (14, 16) étant raccordés à un même circuit (10) de liquide caloporteur, et dans lequel le circuit (10) de liquide caloporteur est raccordé à une source ou à un puits de chaleur (18), **caractérisé en ce que** les deux échangeurs (14, 16) et la source ou le puits de chaleur (18) sont raccordés en série dans le circuit (10) de liquide caloporteur, dans l'ordre: source ou puits de chaleur, échangeur (14) liquide caloporteur / huile, échangeur (16) liquide caloporteur / gaz d'échappement recirculés, en considérant le sens de circulation du liquide caloporteur dans le circuit (10).

2. Dispositif de régulation thermique de fluides selon la revendication 1, dans lequel la source ou le puits de chaleur comprend des moyens de stockage thermique (18) pouvant échanger de la chaleur avec le liquide caloporteur, notamment pendant un mode de chauffage, dans lequel la chaleur des moyens de stockage (18) est transférée au liquide caloporteur, et pendant un mode de régénération, dans lequel la chaleur du liquide caloporteur est transférée aux moyens de stockage (18).

3. Dispositif de régulation thermique de fluides selon la revendication 2, dans lequel les moyens de stockage thermiques (18) comprennent un composé chimique stockant ou libérant de l'énergie thermique en changeant de phase.

4. Dispositif de régulation thermique de fluides selon l'une quelconque des revendications 1 à 3, dans lequel le circuit (10) de liquide caloporteur comprend des moyens (23) de dérivation de l'échangeur (14) liquide caloporteur / huile.

5. Dispositif de régulation thermique de fluides selon la revendication 4, dans lequel les moyens (23) de dérivation de l'échangeur (14) liquide caloporteur / huile comprennent une branche (24) de dérivation de l'échangeur (14) liquide caloporteur / huile et une vanne à trois voies (26A) comprenant des première et seconde voies de mêmes signes, raccordées l'une à l'échangeur (14) et l'autre à la branche (24) de dérivation de l'échangeur (14) liquide caloporteur / huile, et une troisième voie de signe opposé aux précédentes raccordée au circuit (10).

6. Dispositif de régulation thermique de fluides selon la revendication 4, dans lequel les moyens (23) de dérivation de l'échangeur (14) liquide caloporteur / huile comprennent une vanne à quatre voies (26B) comprenant deux voies de signes opposés raccordées à l'échangeur (14) liquide caloporteur / huile et deux voies de signes opposés raccordées au circuit (10) de liquide caloporteur.

7. Dispositif de régulation thermique de fluides selon l'une quelconque des revendications 1 à 6, dans lequel le circuit (10) de liquide caloporteur comprend des moyens (27) de dérivation de la source ou du puits de chaleur (18).

8. Dispositif de régulation thermique de fluides selon la revendication 7, dans lequel les moyens (27) de dérivation de la source ou du puits de chaleur (18) comprennent une branche (28) de dérivation de la source ou du puits de chaleur (18) et une vanne à trois voies (30A) comprenant des première et seconde voies de mêmes signes, raccordées l'une à la source ou au puits de chaleur (18) et l'autre à la branche (28) de dérivation de la source ou du puits de chaleur (18), et une troisième voie de signe opposé aux précédentes raccordée au circuit (10).

9. Dispositif de régulation thermique de fluides selon la revendication 7, dans lequel les moyens (27) de dérivation de la source ou du puits de chaleur (18) comprennent une vanne à quatre voies (30B) comprenant deux voies de signes opposés raccordées à la source ou au puits de chaleur (18) et deux voies de signes opposés raccordées au circuit (10) de liquide caloporteur.

10. Dispositif de régulation thermique de fluides selon l'une quelconque des revendications 1 à 9, dans lequel le circuit (10) de liquide caloporteur comprend des moyens (31) de dérivation du moteur (12).

11. Dispositif de régulation thermique de fluides selon la revendication 10, dans lequel les moyens (31) de dérivation du moteur (12) comprennent une branche (32) de dérivation de ce moteur (12) et une vanne à trois voies (34A) comprenant des première et seconde voies de mêmes signes, raccordées l'une au moteur (12) et l'autre à la branche (32) de dérivation de ce moteur (12), et une troisième voie de signe opposé aux précédentes raccordée au circuit (10).

12. Dispositif de régulation thermique de fluides selon la revendication 10, dans lequel les moyens (31) de dérivation du moteur (12) comprennent une vanne à quatre voies (34B) comprenant deux voies de signes opposés raccordées au moteur (12) et deux voies de signes opposés raccordées au circuit (10).

13. Dispositif de régulation thermique de fluides selon l'une quelconque des revendications précédentes, dans lequel le circuit (10) de liquide caloporteur est raccordé de plus à des moyens (20) d'échange thermique entre le liquide caloporteur et l'air d'un habitacle du véhicule.

14. Dispositif de régulation thermique de fluides selon l'une quelconque des revendications précédentes, dans lequel le circuit de liquide caloporteur est raccordé en outre à une pompe électrique (38) permettant de faire circuler le liquide caloporteur dans au moins une partie du circuit (10) notamment lorsque le moteur (12) est à l'arrêt.

## Claims

1. A device for thermal regulation of fluids circulating in a vehicle having a heat engine (12), of the type comprising a circuit (10) in which a heat-transfer liquid circulates for cooling the heat engine (12) and at least one heat-transfer liquid/fluid to be regulated heat exchanger (14, 16), intended to regulate thermally the first and second fluids, formed respectively by lubricating oil of the heat engine of the vehicle and by recirculated exhaust gases, and comprising: a first heat-transfer liquid/lubricating oil exchanger (14), a second heat-transfer liquid/recirculated exhaust gases exchanger (16), the first and the second exchangers (14, 16) being connected to the same circuit (10) of heat-transfer liquid, and in which the circuit (10) of heat-transfer liquid is connected to a heat source or to a heat sink (18), **characterized in that** the two exchangers (14, 16) and the heat source or heat sink (18) are connected in series in the circuit (10) of heat-transfer liquid, in the order: heat source or heat sink, heat-transfer liquid/oil exchanger (14), heat-transfer liquid/recirculated exhaust gases exchanger (16), considering the direction of circulation of the heat-transfer liquid in the circuit (10).

2. The device for thermal regulation of fluids according to Claim 1, in which the heat source or heat sink comprises heat storage means (18) able to exchange heat with the heat-transfer liquid, in particular during a heating mode, in which the heat of the storage means (18) is transferred to the heat-transfer liquid, and during a regeneration mode, in which the heat of the heat-transfer liquid is transferred to the storage means (18).

3. The device for thermal regulation of fluids according to Claim 2, in which the thermal storage means (18) comprise a chemical compound storing or releasing thermal energy by changing phases.

4. The device for thermal regulation of fluids according to any one of Claims 1 to 3, in which the circuit (10) of heat-transfer liquid comprises derivation means (23) from the heat-transfer liquid/oil exchanger (14).

5. The device for thermal regulation of fluids according to Claim 4, in which the derivation means (23) from the heat-transfer liquid/oil exchanger (14) comprise a derivation branch (24) from the heat-transfer liquid/oil exchanger (14) and a three-way valve (26A) comprising first and second channels of the same signs, one connected to the exchanger (14) and the other to the derivation branch (24) of the heat-transfer liquid/oil exchanger (14), and a third channel of the sign opposed to the preceding ones, connected to the circuit (10).

6. The device for thermal regulation of fluids according to Claim 4, in which the derivation means (23) from the heat-transfer liquid/oil exchanger (14) comprise a four-way valve (26B) comprising two channels of opposed signs connected to the heat-transfer liquid/oil exchanger (14) and two channels of opposed signs connected to the heat-transfer liquid circuit (10) .

7. The device for thermal regulation of fluids according to any one of Claims 1 to 6, in which the heat-transfer liquid circuit (10) comprises derivation means (27) from the heat source or from the heat sink (18) .

8. The device for thermal regulation of fluids according to Claim 7, in which the derivation means (27) from the heat source or from the heat sink (18) comprise a derivation branch (28) from the heat source or from the heat sink (18) and a three-way valve (30A) comprising first and second channels of the same signs, one connected to the heat source or to the heat sink (18), and the other to the derivation branch (28) from the heat source or from the heat sink (18), and a third channel of the sign opposed to the preceding ones, connected to the circuit (10).

9. The device for thermal regulation of fluids according to Claim 7, in which the derivation means (27) from the heat source or from the heat sink (18) comprise a four-way valve (30B) comprising two channels of opposed signs connected to the heat source or to the heat sink (18) and two channels of opposed signs connected to the heat-transfer liquid circuit (10).

10. The device for thermal regulation of fluids according to any one of Claims 1 to 9, in which the heat-transfer liquid circuit (10) comprises derivation means (31) from the motor (12).

11. The device for thermal regulation of fluids according to Claim 10, in which the derivation means (31) from the engine (12) comprise a derivation branch (32) from this engine (12) and a three-way valve (34A) comprising first and second channels of the same signs, one connected to the engine (12) and the other to the derivation branch (32) of this engine (12), and a third channel of the sign opposed to the preceding ones, connected to the circuit (10).

12. The device for thermal regulation of fluids according to Claim 10, in which the derivation means (31) from the engine (12) comprise a four-way valve (34B) comprising two channels of opposed signs connected to the engine (12) and two channels of opposed signs connected to the circuit (10).

13. The device for thermal regulation of fluids according to any one of the preceding claims, in which the heat-transfer liquid circuit (10) is connected in addition to heat exchange means (20) between the heat-transfer liquid and the air of a passenger compartment of the vehicle.

14. The device for thermal regulation of fluids according to any one of the preceding claims, in which the heat-transfer liquid circuit is connected additionally to an electric pump (38) allowing the heat-transfer liquid to be circulated in at least a portion of the circuit (10) in particular when the engine (12) is at a standstill.

## Patentansprüche

1. Vorrichtung zur Wärmeregulierung von Fluiden, die in einem Fahrzeug mit Verbrennungsmotor (12) zirkulieren, des Typs, die einen Kreislauf (10) aufweist, in dem eine Kühlflüssigkeit des Verbrennungsmotors (12) zirkuliert, und mindestens einen Wärmeaustauscher (14, 16) Kühlflüssigkeit / zu regulierendes Fluid, der zum Wärmeregulieren eines ersten und eines zweiten Fluids bestimmt ist, das jeweils aus Schmieröl des Verbrennungsmotors des Fahrzeugs und aus rezirkulierten Abgasen besteht, und Folgendes aufweisend: einen ersten Wärmeaustauscher (14) Kühlflüssigkeit / Schmieröl, einen zweiten Wärmeaustauscher (16) Kühlmittel / rezirkulierte Abgase, wobei der erste und der zweite Wärmeaustauscher (14, 16) an einen gleichen Kühlflüssigkeitskreislauf (10) angeschlossen sind, und wobei der Kühlflüssigkeitskreislauf (10) an eine Wärmequelle oder eine Wärmesenke (18) angeschlossen ist, **dadurch gekennzeichnet, dass** die zwei Austauscher (14, 16) und die Wärmequelle oder Wärmesenke (18) in Serie in dem Kühlflüssigkeitskreislauf (10) in der folgenden Reihenfolge angeschlossen sind: Wärmequelle oder Wärmesenke, Wärmeaustauscher (14) Kühlflüssigkeit / Öl, Wärmeaustauscher (16) Kühlflüssigkeit / rezirkulierte Abgase, wenn man die Zirkulationsrichtung der Kühlflüssigkeit in dem Kreislauf (10) betrachtet.

2. Vorrichtung zur Wärmeregulierung nach Anspruch 1, bei der die Wärmequelle oder die Wärmesenke Mittel zum Wärmespeichern (18) aufweist, die Wärme mit der Kühlflüssigkeit austauschen können, insbesondere während eines Heizbetriebs, bei dem die Wärme der Speichermittel (18) an die Kühlflüssigkeit übertragen wird, und während eines Regenerierungsbetriebs, bei dem die Wärme der Kühlflüssigkeit auf die Speichermittel (18) übertragen wird.

3. Vorrichtung zur Wärmeregulierung von Fluiden nach Anspruch 2, bei der die Wärmespeichermittel (18) eine chemische Verbindung aufweisen, die Wärmeenergie beim Phasenwechsel speichert oder freisetzt.

4. Vorrichtung zur Wärmeregulierung von Fluiden nach einem der Ansprüche 1 bis 3, bei der der Kühlflüssigkeitskreislauf (10) Mittel (23) zur Umleitung des Wärmeaustauschers (14) Kühlflüssigkeit / Öl aufweist.

5. Vorrichtung zur Wärmeregulierung von Fluiden nach Anspruch 4, bei der die Umleitmittel (23) des Wärmeaustauschers (14) Kühlflüssigkeit / Öl einen Umleitzweig (24) des Wärmeaustauschers (14) Kühlflüssigkeit / Öl und ein Dreiwegeventil (26A) aufweisen, das einen ersten und einen zweiten Kanal mit gleichen Vorzeichen aufweist, von welchen einer an den Wärmeaustauscher (14) und der andere an den Umleitzweig (24) des Wärmeaustauschers (14) Kühlflüssigkeit / Öl angeschlossen ist, und einen dritten Kanal mit Vorzeichen, das den der vorhergehenden entgegen gesetzt ist, der an den Kreislauf (10) angeschlossen ist.

6. Vorrichtung zur Wärmeregulierung von Fluiden nach Anspruch 4, bei der die Umleitmittel (23) des Wärmeaustauschers (14) Kühlflüssigkeit / Öl ein Vierwegeventil (26B) aufweisen, das zwei Kanäle mit entgegen gesetzten Vorzeichen aufweist, die an den Wärmeaustauscher (14) Kühlflüssigkeit / Öl angeschlossen sind, und zwei Kanäle mit entgegen gesetzten Vorzeichen, die an den Kühlflüssigkeitskreislauf (10) angeschlossen sind.

7. Vorrichtung zur Wärmeregulierung von Fluiden nach einem der Ansprüche 1 bis 6, bei der der Kühlflüssigkeitskreislauf (10) Umleitmittel (27) der Wärmequelle oder der Wärmesenke (18) aufweist.

8. Vorrichtung zur Wärmeregulierung von Fluiden nach Anspruch 7, bei der die Umleitmittel der Wärmequelle oder der Wärmesenke (18) einen Umleitzweig (28) der Wärmequelle oder der Wärmesenke (18) und ein Dreiwegeventil (30A) aufweisen, das einen ersten und einen zweiten Kanal mit gleichem Vorzeichen aufweist, von welchen einer an die Wärmequelle oder an die Wärmesenke (18) und der andere an den Umleitzweig (28) der Wärmequelle oder der Wärmesenke (18) angeschlossen ist, und einen dritten Kanal mit Vorzeichen, das den vorhergehenden entgegen gesetzt ist, der an den Kreislauf (10) angeschlossen ist.

9. Vorrichtung zur Wärmeregulierung von Fluiden nach Anspruch 7, bei der die Umleitmittel (27) der Wärmequelle oder der Wärmesenke (18) ein Vierwegeventil (30B) aufweisen, das zwei Kanäle mit entgegen gesetzten Vorzeichen aufweist, die an die Wärmequelle oder an die Wärmesenke (18) angeschlossen sind, und zwei Kanäle mit entgegen gesetzten Vorzeichen, die an den Kühlflüssigkeitskreislauf (10) angeschlossen sind.

10. Vorrichtung zur Wärmeregulierung von Fluiden nach einem der Ansprüche 1 bis 9, bei der der Kühlflüssigkeitskreislauf (10) Umleitmittel (31) des Motors (12) aufweist.

11. Vorrichtung zur Wärmeregulierung von Fluiden nach Anspruch 10, bei der die Umleitmittel (31) des Motors (12) einen Umleitzweig (32) dieses Motors (12) und ein Dreiwegeventil (34A) aufweisen, das einen ersten und einen zweiten Kanal mit gleichem Vorzeichen aufweist, von welchen einer an den Motor (12) und der andere an den Umleitzweig (32) dieses Motors (12) angeschlossen ist, und einen dritten Kanal mit einem Vorzeichen, das den vorhergehenden entgegen gesetzt ist, der an den Kreislauf (10) angeschlossen ist.

12. Vorrichtung zur Wärmeregulierung von Fluiden nach Anspruch 10, bei der die Umleitmittel (31) des Motors (12) ein Vierwegeventil (34B) aufweisen, das zwei Kanäle mit entgegen gesetzten Vorzeichen aufweist, die an den Motor (12) angeschlossen sind, und zwei Kanäle mit entgegen gesetzten Vorzeichen, die an den Kreislauf (10) angeschlossen sind.

13. Vorrichtung zur Wärmeregulierung von Fluiden nach einem der vorhergehenden Ansprüche, bei welchen der Kühlflüssigkeitskreislauf (10) außerdem an Mittel (20) zum Wärmeaustauschen zwischen der Kühlflüssigkeit und der Luft einer Fahrgastzelle des Fahrzeugs angeschlossen ist.

14. Vorrichtung zur Wärmeregulierung von Fluiden nach einem der vorhergehenden Ansprüche, bei der der Kühlflüssigkeitskreislauf ferner an eine elektrische Pumpe (38) angeschlossen ist, die es erlaubt, die Kühlflüssigkeit in mindestens einem Teil des Kreislaufs (10) zirkulieren zu lassen, insbesondere wenn der Motor (12) stillsteht.
